# FASCICULE DE BREVET EUROPEEN

(11) **EP 1 013 910 B1**
(45) Date de publication et mention de la délivrance du brevet: **25.05.2005**
(21) Numéro de dépôt: 99403184.7
(22) Date de dépôt: 17.12.1999
(51) Int. Cl.: F02C 7/045, B64D 29/06

(54) **Structure d'entrée d'air pour moteur d'aéronef**
Struktur einer Flugzeugtriebwerksgondel
Nacelle structure of an airplane engine

(30) Priorité: 21.12.1998 FR 9816123
(43) Date de publication de la demande: 28.06.2000
(73) Titulaire: AIRBUS France, 31060 Toulouse Cedex 03 (FR)
(72) Inventeur: Porte, Alain, 31770 Colomiers (FR)
(74) Mandataire: Poulin, Gérard

(56) Documents cités:
- DE-A- 4 340 951
- US-A- 4 759 513

## Description

### Domaine technique

L'invention concerne une structure d'entrée d'air susceptible d'être utilisée sur tout type de moteur ou de turboréacteur d'aéronef comportant une entrée d'air.

Plus précisément, l'invention concerne, dans une telle structure, la liaison entre une lèvre d'entrée d'air, un cadre de renfort avant et un panneau acoustique placé immédiatement derrière la lèvre, dans le prolongement de celle-ci.

Par convention, les termes "avant" et "arrière" sont utilisés dans l'ensemble du texte en prenant pour référence l'avant et l'arrière du moteur.

De façon comparable, les termes "interne" et "externe" sont utilisés dans l'ensemble du texte en prenant pour référence le moteur dans son ensemble.

En revanche, et toujours par convention, en l'absence d'une précision contraire, les termes "intérieur" et "extérieur" sont utilisés pour désigner la position ou l'orientation des pièces par rapport à la structure d'entrée d'air considérée isolément.

### Etat de la technique

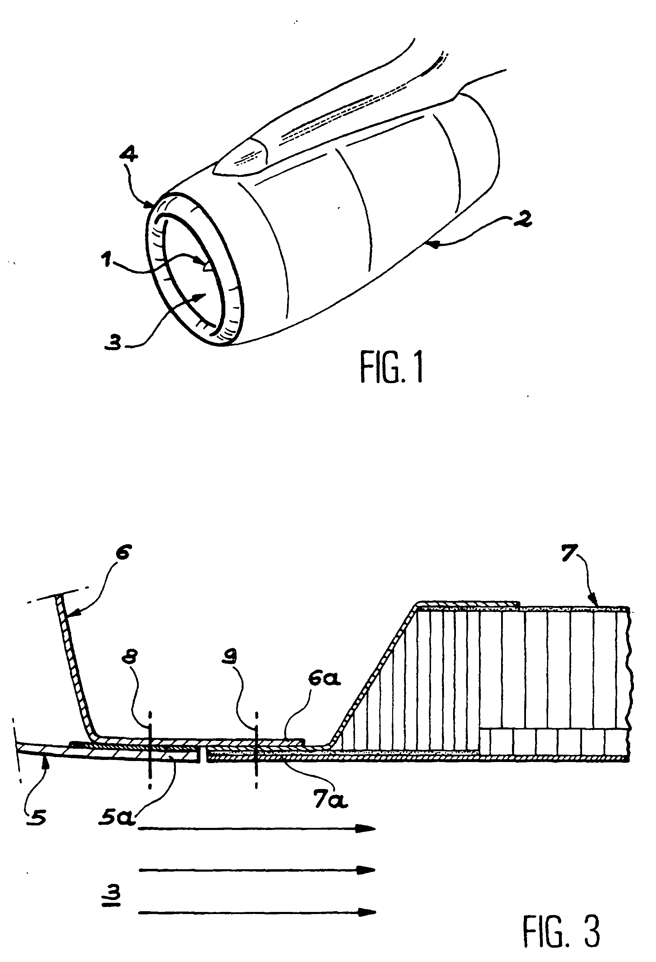

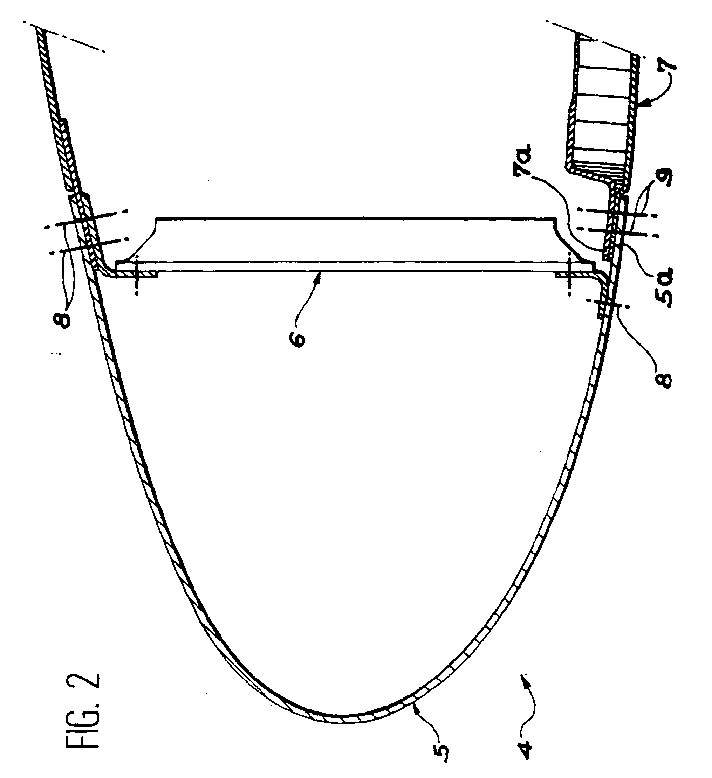

Comme on l'a représenté très schématiquement en perspective sur la figure 1 des dessins annexés, un moteur d'aéronef comprend une partie centrale 1, dans laquelle est logé le moteur proprement dit, ainsi qu'une partie annulaire 2, appelée "nacelle", entourant coaxialement la partie centrale du moteur, et délimitant avec celle-ci un canal annulaire 3 dit "de soufflante". Une soufflante, entraînée par la partie centrale 1 du moteur, est placée à l'entrée du canal de soufflante 3.

La partie avant de la nacelle 2 constitue une structure d'entrée d'air 4. Cette structure a notamment pour fonction d'assurer l'écoulement aérodynamique de l'air d'une part vers le canal de soufflante 3 et, d'autre part, autour de la nacelle 2.

Comme on l'a représenté en coupe et à plus grande échelle sur la figure 2 des dessins annexés, qui illustre une première technique connue de réalisation de la structure d'entrée d'air 4, une telle structure comprend habituellement, du côté du canal de soufflante 3, une lèvre d'entrée d'air 5, un cadre de renfort avant 6 et un panneau acoustique 7.

La lèvre d'entrée d'air 5 présente en section la forme d'un U ouvert vers l'arrière. Elle forme l'enveloppe extérieure de la partie avant de la structure d'entrée d'air. C'est elle qui assure le partage de l'air entre la partie qui pénètre dans le canal de soufflante et la partie qui s'écoule autour de la nacelle.

Le cadre de renfort avant 6 est placé à l'intérieur et à l'arrière de la lèvre d'entrée d'air 5. Il a pour fonctions d'assurer la tenue mécanique de la partie avant de la nacelle et d'aider à en préserver la forme et le dimensionnement. A cet effet, le cadre de renfort avant 6 est fixé à l'intérieur de la lèvre d'entrée d'air 5, du côté du canal de soufflante et du côté externe du moteur, par exemple au moyen de rivets (illustrés par des traits mixtes 8).

Le panneau acoustique 7 forme l'enveloppe extérieure de la nacelle, en arrière de la lèvre d'entrée d'air 5, du côté du canal de soufflante 3. Ce panneau présente une structure propre à atténuer les bruits produits par la partie centrale du moteur et notamment par la soufflante. Dans la pratique, cette structure est habituellement de type composite sandwich, c'est-à-dire que le panneau 7 intègre une âme en nid d'abeilles. Dans la technique d'assemblage connue illustrée sur la figure 2, la partie avant 7a du panneau acoustique 7, dépourvue d'âme en nid d'abeilles, est recouverte extérieurement par la partie arrière 5a de la lèvre d'entrée d'air 5 et fixée à celle-ci par des rivets (illustré par des traits mixtes 9).

Compte tenu de sa position frontale, la lèvre d'entrée d'air 5 est exposée à des dégradations. Ces dégradations peuvent notamment avoir pour origine une érosion due au débit d'air entrant dans le moteur, à la pluie, au gel, aux particules présentes dans l'atmosphère, etc.. Il peut aussi s'agir de dégradations accidentelles dues à des chocs en vol (oiseaux) ou au sol, lors des phases de roulage (projections de cailloux) ou de manutention.

Pour assurer la maintenance, il apparaît que la lèvre d'entrée d'air 5 d'un moteur d'aéronef doit donc être fréquemment démontée. Afin de faciliter les interventions, il est souhaitable que ce démontage puisse être effectué facilement et rapidement. De ce point de vue, la technique utilisée pour assembler la lèvre d'entrée d'air, le cadre de renfort avant et le panneau acoustique est essentielle.

Dans la technique d'assemblage connue illustrée sur la figure 2, la lèvre d'entrée d'air 5 est fixée d'une part au cadre de renfort avant 6 et d'autre part au panneau acoustique 7, sans qu'il existe aucune liaison entre le cadre et le panneau. Par conséquent, lorsqu'on démonte la lèvre d'entrée d'air 5 en enlevant les rivets 8 et 9, il n'existe plus aucune liaison entre le cadre de renfort avant 6 et le panneau acoustique 7. L'assemblage perd donc toute sa rigidité, ses références dimensionnelles, etc..

Pour remédier à cet inconvénient, des outillages spécifiques ont été élaborés afin de restituer à l'avant de la nacelle une certaine rigidité. Toutefois, la mise en place de ces outillages, qui viennent enserrer la structure extérieure de l'entrée d'air, se traduit par une manutention lourde, très pénalisante pour le personnel de maintenance. En outre, cela implique que les outillages soient présents sur les lieux de réparation, ce qui est également très pénalisant.

Sur la figure 3 des dessins annexés, on a représenté en coupe une autre technique connue pour assembler la lèvre d'entrée d'air 5, le cadre de renfort avant 6 et le panneau acoustique 7. Dans ce cas, la partie arrière 5a de la lèvre d'entrée d'air 5 et la partie avant 7a du panneau acoustique 7 sont disposées bout à bout, dans le prolongement l'une de l'autre. Chacune de ces deux parties est alors fixée par des rivets (illustrés respectivement par des traits mixtes 8 et 9) sur une partie arrière 6a du cadre de renfort avant 6, placée à l'intérieur des parties 5a et 7a de la lèvre 5 et du panneau 7.

Lorsque cette technique est utilisée, le démontage de la lèvre d'entrée d'air 5, effectué par enlèvement des rivets 8, ne supprime pas la liaison assurée par les rivets 9 entre le panneau acoustique 7 et le cadre avant 6.

Cependant, cette technique a pour inconvénient de laisser à découvert l'extrémité avant et le bord avant du panneau acoustique 7, dans le canal de soufflante 3. Cette extrémité avant du panneau 7, ainsi que son bord avant, sont donc exposés à tous les phénomènes d'érosion, de délaminage, d'insertion d'eau, etc.. Etant donné que le panneau acoustique 7 est habituellement réalisé en matériau composite, cela se traduit par une accélération difficilement acceptable de l'endommagement de ce panneau.

Le document DE 43 40951 A décrit une structure qui comprend toutes les caractéristiques du préambule de la revendication 1.

### Exposé de l'invention

L'invention a précisément pour objet une structure d'entrée d'air dans laquelle la liaison entre la lèvre d'entrée d'air, le cadre de renfort avant et le panneau acoustique est réalisée de façon telle que les inconvénients des technologies existantes sont supprimés ; en particulier, le démontage de la lèvre ne fait pas disparaître la liaison entre le cadre et le panneau et l'extrémité avant et le bord avant de ce panneau ne sont pas exposés à l'écoulement d'air dans le canal de soufflante.

Conformément à l'invention, ce résultat est obtenu au moyen d'une structure d'entrée d'air, pour moteur d'aéronef, comprenant :
- une lèvre d'entrée d'air, à section en forme de U ouvert vers l'arrière et comportant une partie arrière interne ;
- un cadre de renfort avant, monté dans la lèvre d'entrée d'air ;
- un panneau acoustique ayant une partie avant fixée au cadre de renfort avant par des premiers moyens de fixation pour former un ensemble rigide ; et
- des deuxièmes moyens de fixation, indépendants des premiers moyens de fixation, pour fixer la partie arrière interne de la lèvre d'entrée d'air sur ledit ensemble rigide ;
dans laquelle la partie arrière interne de la lèvre d'entrée d'air recouvre la partie avant du panneau acoustique ; la structure d'entrée d'air étant caractérisée en ce que la partie arrière interne de la lèvre d'entrée d'air recouvre aussi les premiers moyens de fixation.

Dans un premier mode de réalisation de l'invention, la partie avant du panneau acoustique est placée dans le prolongement d'une partie arrière interne du cadre de renfort et la partie arrière interne de la lèvre d'entrée d'air est fixée d'une part à la partie arrière interne du cadre de renfort et d'autre part à la partie avant du panneau acoustique par les deuxièmes moyens de fixation.

Dans ce cas, les premiers moyens de fixation comprennent avantageusement une pluralité de pièces de liaison, circonférentiellement réparties autour d'un axe longitudinal du moteur et chevauchant la partie arrière interne du cadre de renfort avant et la partie avant du panneau acoustique à l'intérieur de la structure. Les premiers moyens de fixation comprennent également des organes de fixation, tels que des rivets, liant les pièces de liaison d'une part à la partie arrière interne du cadre de renfort avant et d'autre part à la partie avant du panneau acoustique.

Pour compenser une éventuelle différence d'épaisseur, des cales d'épaisseur, également traversées par les organes de fixation, peuvent être interposées entre les pièces de liaison et la partie arrière interne du cadre de renfort avant.

Avantageusement, les deuxièmes moyens de fixation comprennent alors d'autres organes de fixation, liant la partie arrière interne de la lèvre d'entrée d'air d'une part, à la partie arrière interne du cadre de renfort avant et, d'autre part, à la partie avant du panneau acoustique, en des emplacements décalés par rapport aux pièces de liaison.

Selon un deuxième mode de réalisation de l'invention, la partie avant du panneau acoustique est décalée vers l'intérieur de la structure, par rapport à la partie arrière interne du cadre de renfort avant. Les premiers moyens de fixation, tels que des rivets, comprennent alors au moins une pièce de liaison ainsi que des organes de fixation liant cette pièce d'une part à la partie arrière interne du cadre de renfort avant et d'autre part à la partie avant du panneau acoustique, à l'intérieur de la structure.

Dans ce deuxième mode de réalisation de l'invention, la partie avant du panneau acoustique peut être sensiblement parallèle à la partie arrière interne du cadre de renfort avant. Les premiers moyens de fixation comprennent alors deux pièces de liaison en forme de cornières circulaires rectangles, dont deux ailes attenantes, orientées sensiblement radialement par rapport à l'axe longitudinal du moteur, sont fixées l'une à l'autre et dont les autres ailes sont fixées respectivement à la partie arrière interne du cadre de renfort avant et à la partie avant du panneau acoustique par les organes de fixation précités.

Les ailes attenantes des deux pièces de liaison peuvent être orientées toutes deux vers l'intérieur de la structure. En variante, elles peuvent aussi être orientées vers l'intérieur de la structure pour la pièce fixée à la partie arrière interne du cadre de renfort avant et vers l'extérieur de la structure pour la pièce fixée à la partie avant du panneau acoustique.

Dans le deuxième mode de réalisation de l'invention, la partie avant du panneau acoustique peut aussi être orientée en oblique de façon à se terminer à proximité du bord arrière du cadre de renfort avant. Les premiers moyens de fixation comprennent alors une seule pièce de liaison en forme de cornière circulaire ouverte, fixée d'une part à la partie arrière interne du cadre de renfort avant et d'autre part à la partie avant du panneau acoustique par les organes de liaison.

Dans le deuxième mode de réalisation de l'invention, les deuxièmes moyens de fixation comprennent avantageusement d'autres organes de fixation, tels que des rivets, liant la partie arrière interne de la lèvre d'entrée d'air à la partie arrière interne du cadre de renfort avant, en traversant la pièce de liaison.

### Brève description des dessins

On décrira à présent, à titre d'exemples non limitatifs, différents modes de réalisation de l'invention, en se référant aux dessins annexés, dans lesquels :
- la figure 1, déjà décrite, est une vue en perspective qui représente un moteur d'aéronef ;
- la figure 2, déjà décrite, est une vue en coupe longitudinale qui représente une première technique de réalisation connue d'une structure d'entrée d'air ;
- la figure 3, déjà décrite, est une vue en coupe longitudinale qui représente une deuxième technique de réalisation connue d'une structure d'entrée d'air ;
- la figure 4 est une vue en coupe comparable à la figure 2, qui représente une structure d'entrée d'air conforme à un premier mode de réalisation de l'invention ;
- la figure 5 est une vue en perspective, avec arrachement partiel, illustrant la structure de la figure 4 ; et
- les figures 6A, 6B et 6C sont des vues en coupe longitudinale comparables à la figure 3, illustrant trois variantes d'un deuxième mode de réalisation de l'invention.

### Description détaillée de plusieurs modes de réalisation préférés de l'invention

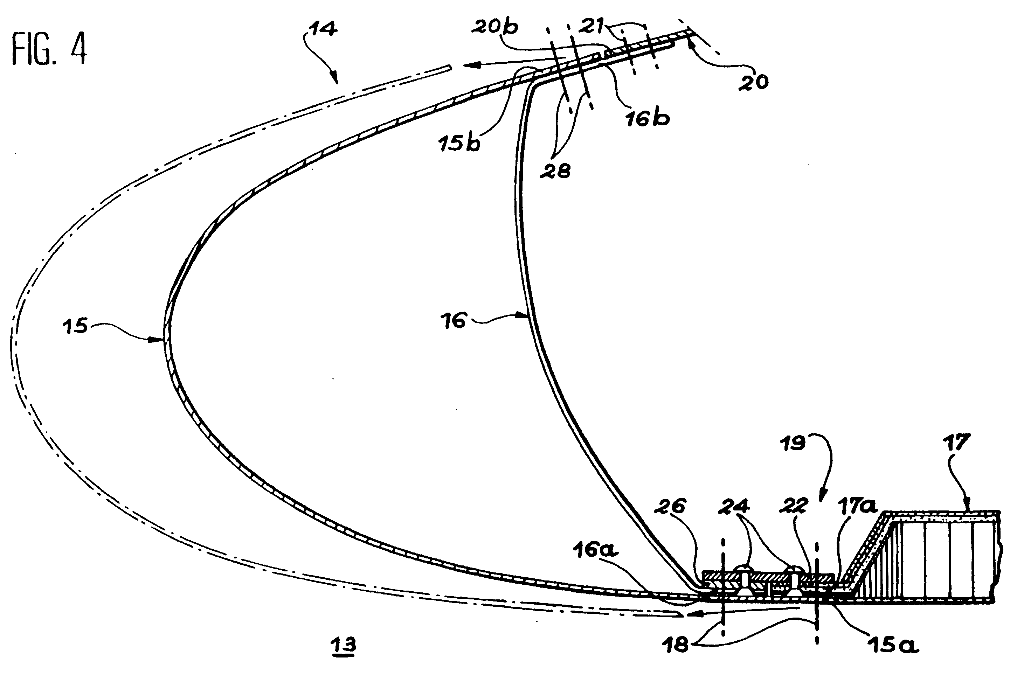

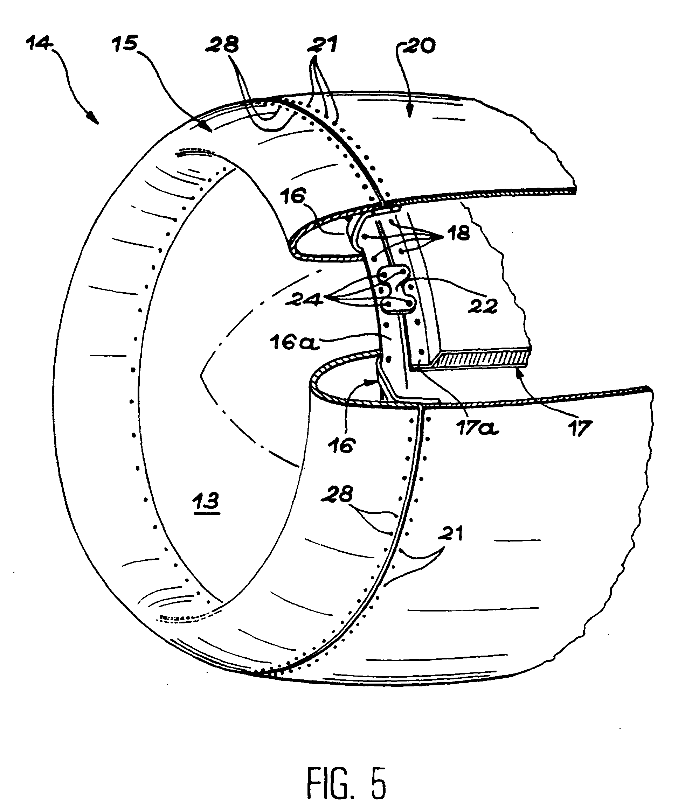

Les figures 4 et 5 illustrent un premier mode de réalisation d'une structure d'entrée d'air 14, pour moteur d'aéronef, conforme à l'invention. De façon habituelle, cette structure 14 comprend une lèvre d'entrée d'air 15, un cadre de renfort avant 16 et un panneau acoustique 17.

La lèvre d'entrée d'air 15 présente une section en forme de U ouvert vers l'arrière et forme l'enveloppe extérieure de la partie avant de la nacelle du moteur.

Le cadre de renfort avant 16 est monté à l'intérieur et à l'arrière de la lèvre 15 et présente également approximativement une section en forme de U ouvert vers l'arrière. Il a pour fonctions d'assurer la rigidité et le maintien des formes et des dimensions de la partie avant de la nacelle.

Enfin, le panneau acoustique 17 forme l'enveloppe extérieure de la nacelle, du côté du canal de soufflante 13 du moteur, à l'arrière de la lèvre d'entrée d'air 15. Il est réalisé en un matériau composite sandwich incluant une âme en nid d'abeilles et des peaux intérieure et extérieure. Dans la partie avant 17a du panneau 17, dépourvue d'âme en nid d'abeilles, ces peaux sont reliées l'une à l'autre.

Sur la périphérie externe de la nacelle, une partie arrière externe 16b du cadre de renfort avant 16 est fixée à l'intérieur d'une partie avant 20b d'une enveloppe extérieure 20, par exemple au moyen de rivets symbolisés par les traits mixtes 21. Par ailleurs, une partie arrière externe 15b de la lèvre d'entrée d'air 15 est fixée sur la partie arrière externe 16b, dans le prolongement de la partie 20b, par exemple au moyen de rivets symbolisés par les traits mixtes 28.

Sur la périphérie interne de la nacelle, autour du canal de soufflante 13, une partie arrière interne 16a du cadre de renfort avant 16 est fixée à la partie avant 17a du panneau acoustique 17 par des premiers moyens de fixation 19 qui peuvent prendre différentes formes, comme on le verra par la suite. De plus, la partie arrière interne 15a de la lèvre 15 est fixée au moins sur la partie arrière interne 16a du cadre 16 par des deuxièmes moyens de fixation 18 indépendants des premiers moyens de fixation 19 et qui seront décrits ultérieurement. Par ailleurs et conformément à l'invention, la partie arrière interne 15a de la lèvre d'entrée d'air 15 recouvre à la fois la partie arrière 16a du cadre 16, la partie avant 17a du panneau 17 ainsi que les premiers moyens de fixation 19.

Grâce à cet agencement, comme on l'a représenté en traits mixtes sur la figure 4, l'enlèvement des deuxièmes moyens de fixation 18 et des rivets 23 permet de démonter la lèvre d'entrée d'air 15 sans que la liaison entre le cadre 16 et le panneau 17, assurée par les premiers moyens de fixation 19, soit supprimée. Le cadre 16 et le panneau 17 forment ainsi un ensemble qui reste rigide, après démontage des deuxièmes moyens de fixation 18. De plus, l'agencement est tel que la partie avant 17a du panneau acoustique 17 est totalement recouverte par la partie arrière 15a de la lèvre d'entrée d'air 15. Tout risque d'endommagement accéléré du panneau acoustique 17 est ainsi évité.

Dans le premier mode de réalisation illustré sur les figures 4 et 5, la partie avant 17a du panneau acoustique 17 est placée dans le prolongement de la partie arrière interne 16a du cadre de renfort avant 16.

Dans ce cas, les premiers moyens de fixation 19 comprennent une pluralité de pièces de liaison 22, ainsi que des organes de fixation, tels que des rivets 24, reliant les pièces 22 d'une part à la partie arrière interne 16a du cadre 16 et d'autre part à la partie avant 17a du panneau 17.

Comme l'illustre plus précisément la figure 5, les pièces 22 sont des pièces approximativement en forme de H, régulièrement réparties sur toute la circonférence de la structure, autour de l'axe longitudinal du moteur. Plus précisément, les pièces 22 chevauchent les parties 16a et 17a vers l'intérieur de la structure d'entree d'air, de telle sorte que la branche centrale du H soit disposée selon la ligne de jonction entre ces deux parties. Chaque pièce 22 est alors fixée par deux rivets 24 à la partie arrière interne 16a du cadre 16 et, par deux autres rivets 24 à la partie avant 17a du panneau acoustique 17.

Pour tenir compte du fait que la partie avant 17a du panneau acoustique 17 est généralement plus épaisse que la partie arrière interne 16a du cadre de renfort avant 16, on interpose de préférence entre la partie 16a et chacune des pièces 22 une cale d'épaisseur 26 (figure 4).

Comme l'illustre notamment la figure 4, les rivets 24 traversent les pièces 22 ainsi que la partie 16a ou la partie 17a. Plus précisément, les rivets 24 comprennent des têtes fraisées, logées dans des parties en creux usinées dans les parties 16a et 17a, vers l'extérieur de la structure. Cet agencement permet de loger en totalité les têtes des rivets dans les évidements. En d'autres termes, les têtes des rivets affleurent les surfaces des parties 16a et 17a tournées vers l'extérieur de la structure.

Par ailleurs, la partie arrière interne 15a de la lèvre 15 recouvre les parties 16a et 17a ainsi que les têtes des rivets 24. Les deuxièmes moyens de fixation par lesquels cette partie 15a est fixée aux parties 16a et 17a sont alors constitués par des organes de fixation tels que des rivets 18 (illustrés par des traits mixtes sur la figure 4). Certains de ces rivets 18 servent à fixer la lèvre 15 sur le cadre 16 en traversant les parties 15a et 16a de ces deux pièces en des emplacements décalés par rapport aux pièces 22, comme l'illustre notamment la figure 5. D'autres rivets 18 traversent la partie 16a de la lèvre 15 ainsi que la partie 17a du panneau 17 en des emplacements également décalés par rapport aux pièces 22.

Il est ainsi possible de démonter la lèvre d'entrée d'air 15, en retirant les rivets 18 et 28, sans aucun risque de supprimer la liaison assurée par ailleurs entre le cadre 16 et le panneau acoustique 17 par les deuxièmes moyens de fixation 19. En effet, les rivets 24 sont masqués par la lèvre 15. Le personnel de maintenance ne peut donc pas les percer par inadvertance, lorsqu'il enlève la lèvre d'entrée d'air.

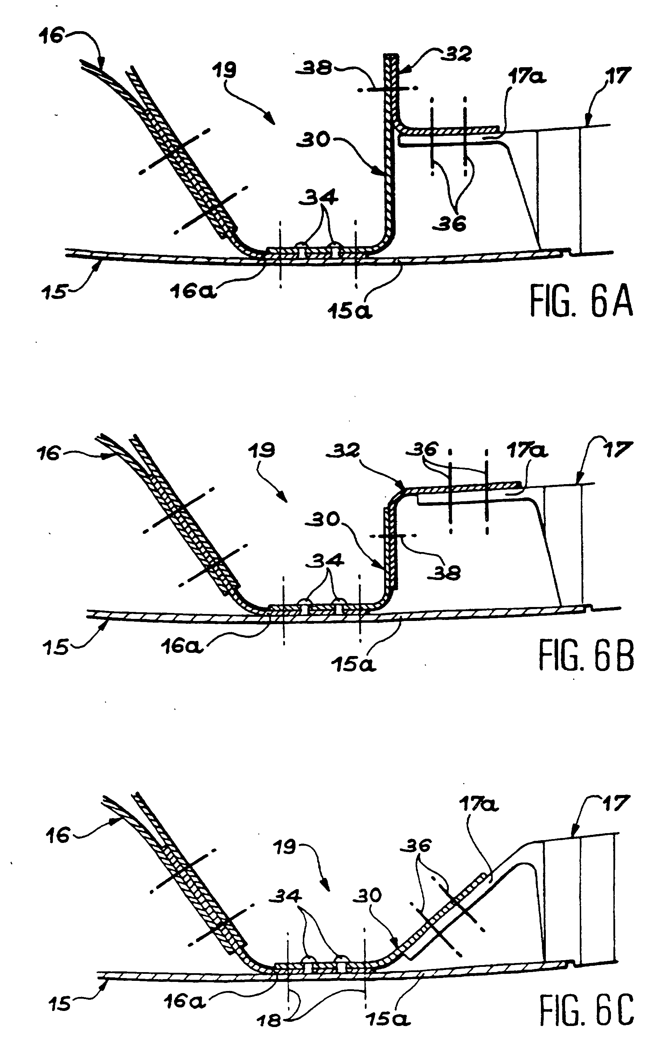

On décrira à présent, en se référant aux figures 6A, 6B et 6C trois variantes d'un deuxième mode de réalisation de l'invention.

Ce deuxième mode de réalisation de l'invention se distingue essentiellement du premier par le fait qu'au lieu d'être placée dans le prolongement de la partie arrière interne 16a du cadre 16, la partie avant 17a du panneau acoustique 17 est décalée vers l'intérieur de la structure par rapport à cette partie 16a.

Plus précisément, dans les variantes de réalisation des figures 6A et 6B, la partie avant 17a du panneau acoustique 17 est orientée sensiblement parallèlement à la partie arrière interne 16a du cadre de renfort avant 16. Dans ces conditions, les premiers moyens de fixation 19 reliant le cadre 16 au panneau 17 comprennent deux pièces de liaison 30 et 32, présentant l'une et l'autre la forme d'une cornière circulaire rectangle.

Dans ces deux variantes, une première aile, cylindrique, de la pièce de liaison 30 est fixée à l'intérieur de la partie arrière interne 16a du cadre 16 par des organes de fixation tels que des rivets 34 et une première aile, cylindrique, de la pièce de liaison 32 est fixée à l'intérieur de la partie avant 17a du panneau 17 par des organes de fixation tels que des rivets (schématisés par des traits mixtes 36).

Dans la variante de la figure 6A, les deuxièmes ailes des pièces de liaison 30 et 32 s'étendent toutes deux radialement vers l'intérieur de la structure et sont fixées l'une à l'autre par des organes de fixation tels que des rivets (schématisés par des traits mixtes 38).

Dans la variante de réalisation de la figure 6B, la deuxième aile de la pièce de liaison 30 s'étend radialement vers l'intérieur de la structure et la deuxième aile de la pièce de liaison 32 s'étend radialement vers l'extérieur de la structure. Ces deux ailes sont également fixées l'une à l'autre par des organes de fixation tels que des rivets (schématisés par des traits mixtes 38).

Dans la variante de réalisation illustrée sur la figure 6C, la partie avant 17a du panneau acoustique 17 est orientée en oblique, de telle sorte que son bord avant se termine à proximité du bord arrière interne de la partie arrière 16a du cadre 16.

Dans ces conditions, les premiers moyens de fixation 19 qui relient le cadre 16 au panneau 17 comprennent une seule pièce de liaison 30 qui présente la forme d'une cornière circulaire ouverte. Une première aile, cylindrique, de cette pièce de liaison est fixée à l'intérieur de la partie arrière interne 16a du cadre 16 au moyen d'organes de fixation tels que des rivets 34 et la deuxième aile de la pièce de liaison 30 est fixée a l'intérieur de la partie avant 17a du panneau 17 au moyen d'organes de fixation tels que des rivets, (schématisés par des traits mixtes 36).

Dans les trois variantes de la deuxième forme de réalisation de l'invention, qui viennent d'être décrites en se référant aux figures 6A à 6C, les deuxièmes moyens de fixation 18 comprennent des organes de fixation tels que des rivets, qui traversent les parties 15a et 16a. Selon le cas, ces rivets 18 peuvent aussi traverser l'aile correspondante de la pièce 30 ou être placés au niveau de fenêtres (non représentées) prévues à cet effet dans cette aile.

Par ailleurs, les têtes des rivets 34 sont logées dans des creux usinés sur la face intérieure de la partie 16a, de façon à affleurer cette face, comme dans le premier mode de réalisation décrit précédemment.

Par ailleurs, la partie arrière interne 15a de la lèvre d'entrée d'air 15 se prolonge également vers l'arrière de façon à assurer la continuité avec la surface du panneau acoustique 17 tournée vers le canal de soufflante, tout en recouvrant intégralement la partie avant 17a du panneau 17, ainsi que les premiers moyens de fixation 19.

Comme dans le premier mode de réalisation de l'invention, cet agencement permet de préserver l'intégrité de la liaison entre le cadre 16 et le panneau 17 lorsque la lèvre 15 est démontée, tout en assurant la protection de la partie avant 17a du panneau 17 lorsque la lèvre 15 est en place. Cet agencement permet également d'éviter tout risque de démontage accidentel de la liaison entre le cadre 16 et le panneau 17 lors de l'enlèvement de la lèvre 15, du fait que les premiers moyens de fixation 19 reliant le cadre et le panneau sont totalement recouverts par la partie arrière interne 15a de la lèvre 15.

Bien entendu, l'invention n'est pas limitée aux modes de réalisation qui viennent d'être décrits à titre d'exemples. Ainsi, les formes données au cadre de renfort avant 16, à la partie avant 17a du panneau acoustique 17 et aux pièces servant à relier ces deux éléments de structure peuvent subir différentes modifications sans sortir du cadre de l'invention. Par ailleurs, les pièces 22 peuvent être fixées sur le cadre 16 en un emplacement décalé vers l'avant et vers l'intérieur de la structure d'entrée d'air. En outre, au lieu d'être réalisée d'un seul tenant, la lèvre d'entrée d'air peut comprendre une partie arrière interne divisée en deux sections entourant respectivement la partie arrière interne du cadre 16 et la partie avant du panneau 17, et fixées à celles-ci.

## Revendications

1. Structure d'entrée d'air, pour moteur d'aéronef, comprenant :
- une lèvre d'entrée d'air (15), à section en forme de U ouvert vers l'arrière et comportant une partie arrière interne (15a) ;
- un cadre de renfort avant (16), monté dans la lèvre d'entrée d'air (15) ;
- un panneau acoustique (17) ayant une partie avant (17a) fixée au cadre de renfort avant (16) par des premiers moyens de fixation (19) pour former un ensemble rigide ; et
- des deuxièmes moyens de fixation (18), indépendants des premiers moyens de fixation (19), pour fixer la partie arrière interne (15a) de la lèvre d'entrée d'air (15) sur ledit ensemble rigide ;
dans laquelle la partie arrière interne (15a) de la lèvre d'entrée d'air (15) recouvre la partie avant (17a) du panneau acoustique (17) ; la structure d'entrée d'air étant **caractérisée en ce que** la partie arrière interne (15a) de la lèvre d'entrée d'air (15) recouvre aussi et les premiers moyens de fixation (19).

2. Structure d'entrée d'air selon la revendication 1, dans laquelle la partie avant (17a) du panneau acoustique (17) est placée dans le prolongement d'une partie arrière interne (16a) du cadre de renfort avant (16), et la partie arrière interne (15a) de la lèvre d'entrée d'air (15) est fixée d'une part à la partie arrière interne (16a) du cadre de renfort (16) et d'autre part à la partie avant (17a) du panneau acoustique (17) par les deuxièmes moyens de fixation (18).

3. Structure d'entrée d'air selon la revendication 2, dans laquelle les premiers moyens de fixation (19) comprennent une pluralité de pièces de liaison (22), circonférentiellement réparties autour d'un axe longitudinal du moteur et chevauchant la partie arrière interne (16a) du cadre de renfort avant (16) et la partie avant (17a) du panneau acoustique (17) à l'intérieur de ladite structure, et des organes de fixation (24) liant les pièces de liaison (22) d'une part à la partie arrière interne (16a) du cadre de renfort avant (16) et d'autre part à la partie avant (17a) du panneau acoustique (17).

4. Structure d'entrée d'air selon la revendication 3, dans laquelle des cales d'épaisseur (26), également traversées par les organes de fixation (24), sont interposées entre les pièces de liaison (22) et la partie arrière interne (16a) du cadre de renfort avant (16).

5. Structure d'entrée d'air selon l'une quelconque des revendications 3 et 4, dans laquelle les deuxièmes moyens de fixation comprennent d'autres organes de fixation (18), liant la partie arrière interne (15a) de la lèvre d'entrée d'air (15) d'une part à la partie arrière interne (16a) du cadre de renfort avant (16) et d'autre part à la partie avant (17a) du panneau acoustique (17), en des emplacements décalés par rapport aux pièces de liaison (22).

6. Structure d'entrée d'air selon la revendication 1, dans laquelle la partie avant (17a) du panneau acoustique (17) est décalée vers l'intérieur de la structure, par rapport à une partie arrière interne (16a) du cadre de renfort avant (16), et les premiers moyens de fixation (19) comprennent au moins une pièce de liaison (30,32) et des organes de fixation (34,36) liant ladite pièce d'une part à la partie arrière interne (16a) du cadre de renfort avant (16) et d'autre part à la partie avant (17a) du panneau acoustique (17), à l'intérieur de la structure.

7. Structure d'entrée d'air selon la revendication 6, dans laquelle la partie avant (17a) du panneau acoustique (17) est sensiblement parallèle à la partie arrière interne (16a) du cadre de renfort avant (16), et les deuxièmes moyens de fixation (19) comprennent deux pièces de liaison (30,32) en forme de cornières circulaires rectangles, dont deux ailes attenantes, orientées sensiblement radialement par rapport à un axe longitudinal du moteur, sont fixées l'une à l'autre et dont les autres ailes sont fixées respectivement à la partie arrière interne (16a) du cadre de renfort avant (16) et à la partie avant (17a) du panneau acoustique (17) par les organes de fixation (34,36).

8. Structure d'entrée d'air selon la revendication 7, dans laquelle les ailes attenantes des deux pièces de liaison (30,32) sont orientées vers l'intérieur de la structure.

9. Structure d'entrée d'air selon la revendication 7, dans laquelle les ailes attenantes de la pièce de liaison (30) fixée à la partie arrière interne (16a) du cadre de renfort avant (16) et de la pièce de liaison (32) fixée à la partie avant (17a) du panneau acoustique (17) sont orientées respectivement vers l'intérieur et vers l'extérieur de la structure.

10. Structure d'entrée d'air selon la revendication 6, dans laquelle la partie avant (17a) du panneau acoustique (17) est orientée en oblique et se termine à proximité d'un bord arrière du cadre de renfort avant (16), et les premiers moyens de fixation (19) comprennent une seule pièce de liaison (30) en forme de cornière circulaire ouverte, fixée d'une part à la partie arrière interne (16a) du cadre de renfort avant (16) et d'autre part à la partie avant (17a) du panneau acoustique (17) par les organes de liaison (34,36).

11. Structure d'entrée d'air selon l'une quelconque des revendications 6 à 10, dans laquelle les deuxièmes moyens de fixation comprennent d'autres organes de fixation (18) liant la partie arrière interne (15a) de la lèvre d'entrée d'air (15) à la partie arrière interne (16a) du cadre de renfort avant (16).

## Patentansprüche

1. Lufteingangsstruktur für einen Flugzeugantrieb, umfassend:
- eine Lufteingangslippe (15) mit einem nach hinten offenen U-förmigen Querschnitt, welche einen internen hinteren Abschnitt (15a) umfasst;
- einen vorderen Verstärkungsrahmen (16), welcher an der Lufteingangslippe (15) angebracht ist,
- eine Akustikplatte (17) mit einem am Verstärkungsrahmen (16) mit ersten Befestigungsmitteln (19) zur Bildung einer starren Anordnung befestigten vorderen Abschnitt (17a), und
- von den ersten Befestigungsmitteln (19) unabhängige zweite Befestigungsmittel (18) zum Befestigen des internen hinteren Abschnitts (15a) der Lufteingangslippe (15) an der starren Anordnung,
wobei der interne hintere Abschnitt (15a) der Lufteingangslippe (15) den vorderen Abschnitt (17a) der akustischen Platte (17) abdeckt,
wobei die Lufteingangsstruktur **dadurch gekennzeichnet ist, dass** der interne hintere Abschnitt (15a) der Lufteingangslippe (15) zudem die ersten Befestigungsmittel (19) abdeckt.

2. Lufteingangsstruktur nach Anspruch 1, bei welcher der vordere Abschnitt (17a) der akustischen Platte (17) in der Verlängerung eines internen hinteren Abschnitts (16a) des vorderen Verstärkungsrahmens (16) angeordnet ist und der interne hintere Abschnitt (15a) der Lufteingangslippe (15) durch die zweiten Befestigungsmittel (18) einerseits an dem internen hinteren Abschnitt (16a) des Verstärkungsrahmens (16) und auf der anderen Seite an dem vorderen Abschnitt (17a) der akustischen Platte (17) befestigt ist.

3. Lufteingangsstruktur nach Anspruch 2, bei welcher die ersten Befestigungsmittel (19) eine Vielzahl von Verbindungsstücken (22), welche entlang des Umfangs um eine longitudinale Achse des Motors verteilt sind und mit dem inneren hinteren Abschnitt (16a) des vorderen Verstärkungsrahmens (16) und dem vorderen Abschnitt (17a) der akustischen Platte (17) im Inneren der Struktur überlappen, und Befestigungsorgane (24), welche die Verbindungsstücke (22) einerseits mit dem inneren hinteren Abschnitt (16a) des vorderen Verstärkungsrahmens (16) und andererseits mit dem vorderen Abschnitt (17a) der akustischen Platte (17) verbinden, umfassen.

4. Lufteingangsstruktur nach Anspruch 3, bei welcher Unterlegplatten (26), durch welche zudem die Befestigungsorgane (24) hindurchgehen, zwischen den Verbindungsstücken (22) und dem inneren hinteren Abschnitt (16a) des Verstärkungsrahmens (16) angeordnet sind.

5. Lufteingangsstruktur nach einem der Ansprüche 3 oder 4, bei welcher die zweiten Befestigungsmittel weitere Befestigungsorgane (18) umfassen, welche den inneren hinteren Abschnitt (15a) der Lufteingangslippe (15) einerseits mit dem inneren hinteren Abschnitt (16a) des vorderen Verstärkungsrahmens (16) und andererseits mit dem vorderen Abschnitt (17a) der akustischen Platte (17) an Orten, welche bezüglich der Verbindungsstücke (22) verschoben sind, verbinden.

6. Lufteingangsstruktur nach Anspruch 1, bei welcher der vordere Abschnitt (17a) der akustischen Platte (17) in Bezug auf einen inneren hinteren Abschnitt (16a) des vorderen Befestigungsrahmens (16) zum Inneren der Struktur hin verschoben ist und die ersten Befestigungsmittel (19) mindestens ein Verbindungsstück (30, 32) und Befestigungsorgane (34, 36), welche dieses Stück einerseits mit dem inneren hinteren Abschnitt (16a) des vorderen Befestigungsrahmens (16) und andererseits mit dem vorderen Abschnitt (17a) der akustischen Platte (17) im Inneren der Struktur verbinden.

7. Lufteingangsstruktur nach Anspruch 6, bei welcher der vordere Abschnitt (17a) der akustischen Platte (17) im Wesentlichen parallel zu dem inneren hinteren Abschnitt (16a) des vorderen Befestigungsrahmens (16) ist und die zweiten Befestigungsmittel (19) zwei Verbindungsstücke (30, 32) in Form von ringförmigen rechtwinkligen Winkelstücken umfassen, von denen zwei angrenzende Schenkel, welche im Wesentlichen radial in Bezug auf eine longitudinale Achse des Motors angeordnet sind, aneinander befestigt sind und von denen die anderen Schenkel mit Befestigungsorganen (34, 36) an dem inneren hinteren Abschnitt (16a) des vorderen Befestigungsrahmens (16) bzw. an dem vorderen Abschnitt (17a) der akustischen Platte (17) befestigt sind.

8. Lufteingangsstruktur nach Anspruch 7, bei welcher die angrenzenden Schenkel der zwei Verbindungsstücke (30, 32) zum Inneren der Struktur hin ausgerichtet sind.

9. Lufteingangsstruktur nach Anspruch 7, bei welcher die angrenzenden Schenkel des Verbindungsstücks (30), welches an dem inneren hinteren Abschnitt (16a) des vorderen Verstärkungsrahmens (16) befestigt ist, und des Verbindungsstücks (32), welches am vorderen Abschnitt (17a) der akustischen Platte (17) befestigt ist, zum Inneren bzw. zum Äußeren der Struktur hin ausgerichtet sind.

10. Lufteingangsstruktur nach Anspruch 6, bei welcher der vordere Abschnitt (17a) der akustischen Platte (17) schräg ausgerichtet ist und in der Nähe eines hinteren Randes des vorderen Verstärkungsrahmens (16) endet, und bei welcher die ersten Befestigungsmittel (19) ein einziges Befestigungsstück (30) in Form eines ringförmigen offenen Winkelstücks, welches einerseits an dem inneren hinteren Abschnitt (16a) des vorderen Verstärkungsrahmens (16) und andererseits an dem vorderen Abschnitt (17a) der akustischen Platte (17) durch Verbindungsorgane (34, 36) befestigt ist, umfassen.

11. Lufteingangsstruktur nach einem der Ansprüche 6 bis 10, bei welcher die zweiten Befestigungsmittel weitere Befestigungsorgane (18) umfassen, welche den inneren hinteren Abschnitt (15a) der Lufteingangslippe (15) mit dem inneren hinteren Abschnitt (16a) des vorderen Verstärkungsrahmens (16) verbinden, umfassen.

## Claims

1. Air intake structure for an aircraft engine comprising:
- an air intake lip (15) with a rearwardly open U-shaped cross-section and having an internal, rear part (15a),
- a front reinforcing frame (16) installed in the air intake lip (15),
- an acoustic panel (17) having a front part (17a) fixed to the front reinforcing frame (16) by first fixing means (19) in order to form a rigid assembly and
- second fixing means (18), independent of the first fixing means (19), for fixing the internal, rear part (15a) of the air intake lip (15) to said rigid assembly,
wherein the internal, rear part (15a) of the air intake lip (15) covers the front part (17a) of the acoustic panel, the air intake structure being **characterized in that** the internal, rear part (15a) of the air intake lip (15) covers the front part (17a) of the acoustic panel (17) and the first fixing means (19).

2. Air intake structure according to claim 1, wherein the front part (17a) of the acoustic panel (17) is placed in the extension of a rear, internal part (16a) of the front reinforcing frame (16) and the rear, internal part (15a) of the air intake lip (15) is fixed on the one hand to the rear, internal part (16a) of the reinforcing frame (16) and on the other to the front part (17a) of the acoustic panel (17) by second fixing means (18).

3. Air intake structure according to claim 2, wherein the first fixing means (19) comprise a plurality of linking parts (22), circumferentially distributed about a longitudinal axis of the engine and overlapping the rear, internal part (16a) of the front reinforcing frame (16) and the front part (17a) of the acoustic panel (17) within said structure, and fixing members (24) linking the linking parts (22) on the one hand to the rear, internal part (16a) of the front reinforcing frame (16) and on the other to the front part (17a) of the acoustic panel (17).

4. Air intake structure according to claim 3, wherein shims (26), also traversed by the fixing members (24), are placed between the linking parts (22) and the rear, internal part (16a) of the front reinforcing frame (16).

5. Air intake structure according to either of the claims 3 and 4, wherein the second fixing means comprise other fixing members (18), linking the rear, internal part (15a) of the air intake lip (15) on the one hand to the rear, internal part (16a) of the front reinforcing frame (16) and on the other to the front part (17a) of the acoustic panel (17), at locations offset with respect to the linking parts (22).

6. Air intake structure according to claim 1, wherein the front part (17a) of the acoustic panel (17) is displaced towards the interior of the structure, with respect to a rear, internal part (16a) of the front reinforcing frame (16), and the first fixing means (19) comprise at least one linking part (30, 32) and fixing members (34, 36) linking said part on the one hand to the rear, internal part (16a) of the front reinforcing frame (16) and on the other to the front part (17a) of the acoustic panel (17) in the interior of the structure.

7. Air intake structure according to claim 6, wherein the front part (17a) of the acoustic panel (17) is substantially parallel to the rear, internal part (16a) of the front reinforcing frame (16) and the second fixing means (19) comprise two linking parts (30, 32) in the form of rectangular, circular extrusions, whereof two contiguous flanges, oriented substantially radially with respect to a longitudinal axis of the engine, are fixed to one another and whereof the two other flanges are respectively fixed to the rear, internal part (16a) of the front reinforcing frame (16) and to the front part (17a) of the acoustic panel (17) by fixing members (34, 36).

8. Air intake structure according to claim 7, wherein the contiguous flanges of the two linking parts (30, 32) are oriented towards the interior of the structure.

9. Air intake structure according to claim 7, wherein the contiguous flanges of the linking part (30) fixed to the rear, internal part (16a) of the front reinforcing frame (16) and the linking part (32) fixed to the front part (17a) of the acoustic panel (17) are oriented respectively towards the interior and the exterior of the structure.

10. air intake structure according to claim 6, wherein the front part (17a) of the acoustic panel (17) is obliquely oriented and terminates in the vicinity of a trailing edge of the front reinforcing panel (16) and the first fixing means (19) comprise a single linking part (30) in the form of an open, circular extrusion, fixed on the one hand to the rear, internal part (16a) of the front reinforcing frame (16) and on the other to the front part (17a) of the acoustic panel (17) by linking members (34, 36).

11. Air intake structure according to any one of the claims 6 to 10, wherein the second fixing means comprise other fixing members (18) linking the rear, internal part (15a) of the air intake lip (15) to the rear, internal part (16a) of the front reinforcing frame (16).
